# EUROPÄISCHE PATENTSCHRIFT

(11) **EP 2 750 919 B1**
(45) Veröffentlichungstag und Bekanntmachung des Hinweises auf die Patenterteilung: **05.09.2018**
(21) Anmeldenummer: 12741335.9
(22) Anmeldetag: 31.07.2012
(51) Int. Cl.: B60L 3/00, B60L 3/04, B60L 11/18

(54) **STEUERVORRICHTUNG ZUM STEUERN VON VERRIEGELUNGSAKTOREN**
CONTROL APPARATUS FOR CONTROLLING LOCK ACTUATORS
DISPOSITIF DE COMMANDE DESTINÉ À COMMANDER DES ACTIONNEURS DE VERROUILLAGE

(30) Priorität: 30.08.2011 DE 102011111444
(43) Veröffentlichungstag der Anmeldung: 09.07.2014
(73) Patentinhaber: Phoenix Contact GmbH & Co. KG, 32825 Blomberg (DE)
(72) Erfinder: TEMME, Thorsten, 30459 Hannover (DE)
(74) Vertreter: Bringemeier, Ulrich Heinz
(86) Internationale Anmeldenummer: PCT/EP2012/064912
(87) Internationale Veröffentlichungsnummer: WO 2013/029900

(56) Entgegenhaltungen:
- WO-A1-2011/062004
- WO-A2-2011/006775
- US-A- 5 711 558
- US-A1- 2012 098 278
- XILINX: "Virtex-7 FPGAs Data Sheet:DC and Switching Characteristics", XILINX , 1. März 2011 (2011-03-01), XP002690959, Gefunden im Internet: URL:http://web.archive.org/web/20110601044 540/http://www.xilinx.com/support/document ation/data_sheets/ds183_Virtex_7_Data_Shee t.pdf [gefunden am 2013-01-24]

## Beschreibung

Die vorliegende Erfindung betrifft die Verriegelung eines Ladesteckers in einer Ladestation, insbesondere in einer Ladestation zum Laden eines Energiespeichers eines Elektrofahrzeugs.

Die Druckschrift WO2011/062004 A1 betrifft ein Verriegelungsgerät, das ein unautorisiertes Entfernen eines Ladesteckers aus einer Ladebuchse eines elektrischen Fahrzeugs verhindert. Zur Steuerung eines Ladevorgangs ist eine elektronische Steuereinheit (ECU) beschrieben. Zur Verriegelung des Ladesteckers in der Ladebuchse ist ein Haken vorgesehen. Ein Erfassungssensor dient als Detektionseinheit und überwacht, ob der Haken mit einer Kerbe in Eingriff ist. Wenn der Haken mit der Kerbe in Eingriff steht, stellt der Erfassungssensor ein Detektionssignal an die elektronische Steuereinheit bereit. Dann wird eine Verriegelungseinrichtung in einem gesperrten Zustand geschaltet, um einen Ladevorgang durchzuführen.

Die Druckschrift US 5,711,599 betrifft einen Verriegelungsmechanismus zum Verriegeln eines induktiven Kopplers in einem Ladeport, während eines Ladevorgangs eines elektrischen Fahrzeugs. Ein Ladesystem wird mittels eines Verriegelungsmechanismus 20 in dem Ladeport gehalten. Zur Betätigung des Verriegelungsmechanismus ist ein Aktuator vorgesehen. Der Ladevorgang wird von einem nicht weiter spezifizierten Steuergerät gesteuert. Der Aktuator kann durch eine Spule oder einen Elektromotor gebildet sein.

Zum Laden von Energiespeichern von elektromotorisch betreibbaren Fahrzeugen, insbesondere von Elektrofahrzeugen oder von Hybridfahrzeugen, kann mittels eines Versorgungsnetzes, das sowohl ein Wechsel- als auch ein Gleichstromnetzes sein kann, erfolgen. Die zum Laden der Energiespeicher notwendige Spannung wird üblicherweise durch eine Ladestation bereitgestellt, wobei eine Mehrzahl von Ladestationen eine Ladeinfrastruktur zum Versorgen einer Fahrzeugflotte mit mehreren Fahrzeugen bildet. Die Anforderungen an einen Ladevorgang sowie an die Schnittstellen zwischen einem Fahrzeug und einer Ladestation sind beispielsweise in den Normen IEC61851-1, IEC62196, SAEJ1772 oder GB/T20234-2006 definiert.

In den vorgenannten Normen sind insbesondere unterschiedliche Vorkehrungen definiert, welche es ermöglichen, einen beispielsweise in eine Buchse gesteckten Ladestecker an einem Fahrzeug und/oder an einer Ladestation zu erkennen, eine Stromtragfähigkeit des Ladesteckers zu erkennen, eine durchgängige Verbindung eines Schutzleiters mit einem Fahrzeug zu prüfen, einen Status eines Fahrzeugs an eine Ladestation zu übertragen, durch eine Ladestation einem Fahrzeug einen maximal aus einem Versorgungsnetz zur Verfügung stehenden Ladestrom vorzugeben.

Für die Umsetzung der vorgenannten Vorkehrungen sind nach den vorgenannten Normen typischerweise ein oder mehrere Signalkontakte vorgesehen, welche eine elektrische Verbindung zwischen einem Fahrzeug und einer Ladestation ermöglichen. In einer Ausführung gemäß beispielsweise der Normen IEC 62196 und IEC61851-1 sind in einem Ladestecker zwei Kontakte vorgesehen, für welche üblicherweise die Bezeichnungen Control Pilot (CP), Pilotsignal, Pilotkontakt oder Pilotleiter und Proximity, Proximity Kontakt, Proximity Signal, Annäherung, Annäherungskontakt, Annäherungssignal insbesondere Proximity Detection, Annäherungsdetektion, Proximity Plug, Annäherungskontakt, Charging Connection Confirmation oder Plug Present, (PP) verwendet werden.

Ein Zweck der vorgenannten Vorkehrungen besteht darin, einem Fahrzeug nur dann Leistung aus dem Versorgungsnetz zur Verfügung zu stellen, wenn das Fahrzeug hierzu bereit ist, d.h. wenn ein sicherer Betriebszustand des Fahrzeugs vorliegt. Der sichere Betriebszustand wird insbesondere dann erreicht, wenn ein Ladestecker in einer Ladebuchse gesteckt ist, wenn ein Schutzleiter vorhanden ist, wenn eine Stromtragfähigkeit eines Ladesteckers erkannt wird oder wenn ein Stecker in der Ladestation, d.h. in einer Buchse der Ladestation, zusätzlich verriegelt ist.

Bekannte Ladestationen sind üblicherweise derart ausgeführt, dass ein Ladestecker mittels eines Ladekabels permanent mit der Ladestation verbunden ist und zum Laden eines Energiespeichers eines Fahrzeugs fahrzeugseitig eingesteckt wird, oder dass in der Ladestation ein Steckplatz, d.h. eine Buchse, zur Aufnahme eines Ladesteckers vorgesehen ist.

In der Norm IEC61851-1 ist beispielsweise für die dort genannten Anschlussarten A und B ausgeführt, dass ein Ladestecker mitsamt einem Ladekabel zum Aufladen eines Energiespeichers eines Fahrzeugs in die Ladestation, d.h. in eine Buchse, eingesteckt wird. Hierbei wird optional gefordert, dass der Ladestecker in der Ladestation zum Schutz gegen Diebstahl oder zum Schutz gegen unberechtigtes Herausziehen des Ladesteckers oder Unterbrechen eines Ladevorgangs verriegelt wird. Der Ladestecker wird erst dann freigegeben, wenn die Freigabe von einem autorisierten Benutzer erfolgt oder wenn der Ladevorgang regulär beendet wurde. Für die Verriegelung sind in den üblichen Ladesteckern Aussparungen vorgesehen, in die ein Verriegelungsaktor greifen kann.

Zur Verrieglung eines Ladesteckers in einer Ladestation sind derzeit im Wesentlichen zwei Ausführungsformen von Verriegelungsaktoren bekannt. Gemäß einer ersten Ausführungsform wird die Verriegelung des Ladesteckers durch einen Verriegelungsaktor erzeugt, der zur Verrieglung permanent mit elektrischer Energie, beispielsweise mit Spannung oder mit Strom, versorgt wird. Derartige Verriegelungsaktoren umfassen üblicherweise eine Spule sowie einen in der Spule befindlichen Permanentmagneten und / oder einer weiteren Spule, der oder die bei Anlegen einer Spannung oder eines Stroms einen Verriegelungsbolzen gegen eine Rückstellfeder in einer Verriegelungsposition hält. Wird die Spannungs- bzw. Stromzufuhr zur Spule unterbrochen, so verdrängt die Rückstellfeder den Verriegelungsbolzen für die Entriegelung des Ladesteckers. In einer weiteren Ausführungsform wird der Verriegelungsaktor jeweils zur Verriegelung oder zur Entriegelung eines Ladesteckers mit Energie, insbesondere jeweils durch zeitlich begrenzte Energiezufuhr, z.B.mit einem Energiepuls einer definierten Zeitdauer, wie einem Spannungspuls oder Strompuls, versorgt. So kann beispielsweise ein Elektromotor eines derartigen Verriegelungsaktors einen Verriegelungsbolzen durch eine zeitlich begrenzte Stromzufuhr in eine Verriegelungsstellung und durch eine Stromzufuhr entgegengesetzter Polarität und einer ähnlichen zeitlichen Begrenzung in eine Entriegelungsstellung bewegen.

Die Steuerung der Verriegelungsaktoren zur Verriegelung oder zur Entriegelung eines Ladesteckers basiert daher auf der Erzeugung von Steuersignalen, wie beispielsweise Spannungspulsen oder kontinuierlich angelegten Spannungen, welche die jeweils gewünschte Aktion eines Verriegelungsaktors auslösen. Diese Steuerung wird üblicherweise mittels einer auf den jeweiligen Verriegelungsaktor angepassten Baugruppe realisiert. Nachteilig daran ist jedoch die fehlende Möglichkeit, dieselbe Baugruppe für unterschiedliche Anwendungsszenarien mit unterschiedlichen Verriegelungsaktoren einzusetzen.

Es ist daher die Aufgabe der vorliegenden Erfindung, ein flexibles Konzept zur Steuerung von unterschiedlichen Verriegelungsaktoren zur Verriegelung sowie zur Entriegelung eines Ladesteckers in einer Ladestation zu schaffen.

Diese Aufgabe wird durch die Merkmale der unabhängigen Ansprüche gelöst. Vorteilhafte Weiterbildungsformen sind Gegenstand der Beschreibung, der Zeichnungen sowie der beiliegenden Ansprüche.

Die vorliegende Erfindung basiert auf der Erkenntnis, dass eine flexible Steuerung von unterschiedlichen Verriegelungsaktoren der vorgenannten Art mittels einer Steuervorrichtung realisiert werden kann, welche in der Lage ist, unterschiedliche Steuersignale zum Steuern von unterschiedlichen Verriegelungsfaktoren zu erzeugen. Dadurch kann in vorteilhafter Weise ein und dieselbe Baugruppe zur Steuerung von unterschiedlichen Verriegelungsaktoren eingesetzt werden.

Gemäß einem Aspekt betrifft die Erfindung eine Steuervorrichtung, welche zur Steuerung einer Mehrzahl von mittels Steuersignalen steuerbaren Verriegelungsaktoren zum Verriegeln oder zum Entriegeln eines Ladesteckers in einer elektrischen Ladestation ausgebildet ist, mit einem Prozessor zum Erzeugen von zumindest zwei unterschiedlichen Steuersignalen zum Steuern von zumindest zwei unterschiedlichen Verriegelungsaktoren der Mehrzahl von Verriegelungsaktoren und einem elektrischen Ausgangsterminal zur Steuerung eines Verriegelungsaktors ansprechend auf ein Steuerungssignal.

Das Ausgangsterminal kann vorgesehen sein, die durch den Prozessor erzeugten Steuersignale unverändert auszugeben. Das Ausgangsterminal kann jedoch ausgebildet sein, die durch den Prozessor erzeugten Steuersignale umzuwandeln, und den Verriegelungsaktor mittels des umgewandelten Steuersignals anzusteuern. Das Ausgangsterminal kann ein Schaltnetzwerk, beispielsweise ein Relaisnetzwerk oder ein Transistornetzwerk umfassen, das durch geeignete Ansteuerung sowohl Konstantsignale als auch Pulssignale erzeugen kann. Das Steuersignal ist in diesem Fall ein Schaltsignal zum Bewirken einer Schalthandlung des Schaltnetzwerkes, um den Verriegelungsaktor anzusteuern. Mittels des Schaltnetzwerkes kann beispielweise eine Versorgungsspannung an den Verriegelungsaktor angelegt werden, um beispielsweise eine Verriegelung zu bewirken.

Gemäß einer Ausführungsform kann eine externe Energiequelle zur Energieversorgung des Verriegelungsaktors, z.B. Spannungs- oder Stromversorgung, zum Einsatz kommen, welche mittels des Schaltnetzwerkes auf einen Energieversorgungseingang des Verriegelungsaktors geschaltet werden kann.

Gemäß einer Ausführungsform bildet bereits das durch den Prozessor erzeugte Steuersignal eine Versorgungsspannung zum Aktivieren oder Deaktivieren eines Verriegelungsaktors.

Das elektrische Ausgangsterminal ist bevorzugt direkt oder über einen Steueranschluss mit einem Verriegelungsaktor verbindbar, so dass das elektrische Ausgangsterminal zur Ansteuerung eines Verriegelungsaktors auch unter Ausnutzung weiterer Energieversorgungsquellen wie Strom- oder Spannungsquellen, verwendet wird. Die Verriegelungsaktoren können beispielsweise Verriegelungsaktoren der vorgenannten Art sein und eine elektromechanische Verriegelung des Ladesteckers in der Ladestation bewirken.

Gemäß einer Ausführungsform sind die zumindest zwei unterschiedlichen Steuersignale Verriegelungssignale zum Überführen von zumindest zwei unterschiedlichen Verriegelungsaktoren der Mehrzahl von Verriegelungsaktoren in jeweils einen Verriegelungszustand zum Verriegeln des Ladesteckers in der Ladestation, insbesondere in einer Ladebuchse der Ladestation, vorgesehen, oder die zumindest zwei unterschiedlichen Steuersignale sind Entriegelungssignale zum Überführen von zumindest zwei unterschiedlichen Verriegelungsaktoren in jeweils einen Entriegelungszustand zum Entriegeln des Ladesteckers in der Ladestation, insbesondere in einer Ladebuchse der Ladestation, vorgesehen.

In einem Verriegelungszustand wird beispielsweise ein Verriegelungsbolzen eines Verriegelungsaktors in einer Verriegelungsposition gehalten oder in eine Verriegelungsposition gebracht. In einem Entriegelungszustand wird der Entriegelungsbolzen in einer Entriegelungsposition gehalten oder in eine Entriegelungsposition gebracht, welche eine Entnahme des Steckers aus der Ladestation ermöglicht.

Gemäß einer Ausführungsform ist der Prozessor ausgebildet, ein erstes Steuersignal zum Steuern, insbesondere zum Verriegeln oder zum Entriegeln, eines ersten Verriegelungsaktors der Mehrzahl von Verriegelungsaktoren an das elektrische Ausgangsterminal anzulegen, oder ein zweites Steuersignal zum Steuern, insbesondere zum Verriegeln oder zum Entriegeln, eines zweiten Verriegelungsaktors der Mehrzahl von Verriegelungsaktoren an das elektrische Ausgangsterminal anzulegen. Das Ausgangsterminal ist vorgesehen, das anliegende erste Steuersignal zur Ansteuerung des Verriegelungsaktors entweder auszugeben oder umzuwandeln.

Gemäß einer Ausführungsform ist der Prozessor oder das Ausgangsterminal ausgebildet, eine innerhalb eines Toleranzbereichs konstante Signalamplitude zum Verriegeln des Ladesteckers zu erzeugen, und der Prozessor oder das Ausgangsterminal ist ausgebildet, eine innerhalb eines Toleranzbereichs konstante zweiten Signalamplitude zum Entriegeln des Ladesteckers zu erzeugen, wobei die erste Signalamplitude und die zweite Signalamplitude unterschiedlich sind. Der Toleranzbereich kann beispielsweise eine Amplitudenschwankung um bis zu ±1%, ±2%, ±3%, ±5% oder ±10% angeben. Die erste Amplitude kann beispielsweise höher als die zweite Amplitude sein. Die zweite Amplitude kann insbesondere 0 V oder den negativen Wert der ersten Amplitude betragen. Die konstante Signalamplitude kann daher als Steuersignal von dem Prozessor oder als umgewandeltes Steuersignal von dem Ausgangsterminal, beispielsweise mittels eines Schaltnetzwerkes, erzeugt sein.

Gemäß einer Ausführungsform ist der Prozessor oder das Ausgangsterminal ausgebildet, einen ersten Signalimpuls einer ersten Polarität als Steuersignal zur Verriegelung einer ersten Verriegelung der Mehrzahl von Verriegelungen zu erzeugen, und der Prozessor und das Ausgangsterminal ist ausgebildet, einen zweiten Signalimpuls einer zweiten Polarität als Steuersignal zum Entriegeln einer ersten Verriegelung der Mehrzahl von Verriegelungen zu erzeugen, wobei die erste Polarität und die zweite Polarität unterschiedlich sind. Der Signalimpuls kann daher als Steuersignal von dem Prozessor oder als umgewandeltes Steuersignal von dem Ausgangsterminal, beispielsweise mittels eines Schaltnetzwerkes, erzeugt sein.

Gemäß einer Ausführungsform weisen der erste Signalimpuls und der zweite Signalimpuls innerhalb eines Toleranzbereichs gleiche Amplituden auf.

Gemäß einer Ausführungsform sind die Signalimpulse zeitlich begrenzt und weisen jeweils eine innerhalb eines Toleranzbereichs gleiche oder unterschiedliche Zeitdauer auf. Der Toleranzbereich kann beispielsweise eine Zeitschwankung um bis zu ±1%, ±2%, ±3%, ±5% oder ±10% umfassen.

Die erste Polarität kann beispielsweise eine positive Polarität, und die zweite Polarität kann eine negative Polarität sein, oder umgekehrt. Die zweite Polarität kann jedoch auch der ersten Polarität entsprechen.

Die Signalimpulse können beispielsweise als Spannungsimpulse oder als Stromimpulse mit positiven oder negativen Spannungs- bzw. Stromflanken erzeugt werden.

Gemäß einer Ausführungsform sind die Signalimpulse zeitlich begrenzt und weisen jeweils eine innerhalb eines Toleranzbereichs gleiche oder unterschiedliche Zeitdauer auf. Der Toleranzbereich kann beispielsweise eine Zeitschwankung um bis zu ±1%, ±2%, ±3%, ±5% oder ±10% umfassen.

Gemäß einer Ausführungsform ist das Eingangsterminal zum Empfangen eines Bestätigungssignals von einem Verriegelungsaktor ausgebildet, wobei das Bestätigungssignal eine erfolgreiche Verriegelung oder eine erfolgreiche Entriegelung des Ladesteckers anzeigt, wobei der Prozessor ausgebildet ist, ein Freigabesignal zum Starten eines Ladevorgangs zu erzeugen und an das Ausgangsterminal anzulegen, falls das Bestätigungssignal eine erfolgreiche Verriegelung des Ladesteckers anzeigt, oder wobei der Prozessor ausgebildet ist, ein Steuersignal zum Entriegeln des Ladesteckers nur dann zu erzeugen, wenn der Ladevorgang beendet ist.

Das Ende des Ladevorgangs kann entweder über das Eingangsterminal oder beispielsweise über eine Schnittstelle zu einem Fahrzeug, beispielsweise durch Auswertung eines Fahrzeugstatus über das Pilot-Signal gemäß einer der vorgenannten Normen erfolgen. Wenn aus dem Pilot-Signal beispielsweise ermittelt wird, dass das Fahrzeug für einen Ladevorgang bereit ist, dann wird, optional unter Berücksichtigung des Eingangsterminals, der Ladevorgang freigegeben.

Beispielsweise kann das Eingangsterminal Betätigungssignale, zum Beispiel über ein Bedienerinterface oder eine überlagerte Steuerungseinheit empfangen, die eine Verriegelung oder Entriegelung nach den zuvor beschriebenen Steuerungsarten einleiten. Für den Fall der Entriegelung ist der Prozessor ausgebildet, das Freigabesignal für den Ladevorgang mit der Betätigung des zuvor genannten Eingangs zurückzunehmen.

Das Freigabesignal kann beispielsweise über das Ausgangsterminal ausgegeben werden. Ansprechend auf das Freigabesignal kann die Ladestation einen Ladevorgang beginnen.

Das Ende des Ladevorgangs kann mittels eines Bestätigungssignals, das von der Ladestation stammt und über das Eingangsterminal empfangen werden kann, stammen. Ansprechend auf den Empfang des Bestätigungssignals erzeugt der Prozessor das Steuersignal zum Entriegeln des Ladesteckers, wodurch in vorteilhafter Weise eine versehentliche Entnahme des Ladesteckers aus der Ladestation verhindert wird.

In einer weiteren Ausführung kann die Entriegelung des Ladesteckers über die Auswertung des CP-Signals erfolgen, in dem hier der Fahrzeugzustand detektiert wird, in denen das Fahrzeug nicht mehr bereit zum Laden ist, bzw. detektuiert wird, dass das Ladekabel fahrzeugseitig nicht mehr angeschlossen ist.

Gemäß einer Ausführungsform umfasst das Eingangsterminal eine Schnittstelle zu einem an die Ladestation anschließbaren Energieabnehmer, insbesondere zu einem elektrisch betreibbaren Fahrzeug, wobei die Schnittstelle für eine die Verriegelung des Ladesteckers initiierende Kommunikation, insbesondere für eine Signalabfolge zur Initiierung und/oder kontinuierlichen Überwachung und/oder Beendigung des Ladevorgangs und/oder die darin eingegliederten Verriegelungs- und/oder Entriegelungsvorgänge, zwischen dem an die Ladestation anschließbaren Energieabnehmer vorgesehen ist.

Gemäß einer Ausführungsform ist das Eingangsterminal ferner zum Empfangen eines Berechtigungssignals ausgebildet, wobei der Prozessor ausgebildet ist, ein Steuersignal zum Entriegeln des Ladesteckers nur dann zu erzeugen, falls das Berechtigungssignal das Vorliegen einer Berechtigung eines Benutzers der Ladestation zum Beginnen eines Ladavorgangs anzeigt.

Gemäß einer Ausführungsform ist die Steuervorrichtung ferner ausgebildet, zumindest einen Verriegelungsaktor der Mehrzahl der Verriegelungsaktoren automatisch zu erkennen.

Gemäß einer Ausführungsform ist der Prozessor ausgebildet, ein Steuersignal zum Ansteuern eines ersten Verriegelungsaktors zum Verriegeln des Ladesteckers für eine vorbestimmte Zeitdauer zu erzeugen, wobei das Ausgangsterminal ausgebildet ist, den Verriegelungsaktor ansprechend auf das Steuersignal für die vorbestimmte Zeitdauer anzusteuern, und wobei der Prozessor ausgebildet ist, den Verriegelungsaktor auf der Basis des empfangenen Bestätigungssignals bei Beendigung der Ansteuerung des Verriegelungsaktors zu erkennen. Zeigt das Bestätigungssignal beispielsweise eine Entriegelung des Ladesteckers nach Beendigung der Ansteuerung des Verriegelungsaktors an, so kann auf einen mittels eines Konstantsignals aktivierbaren Verriegelungsaktors geschlossen werden. Zeigt das Bestätigungssignal jedoch weiterhin eine Verriegelung des Ladesteckers an, so ist der Verriegelungsaktor durch Signalimpulse aktivierbar.

Gemäß einer Ausführungsform ist ein Konfigurationsschalter mit einer ersten Schalterstellung und mit einer zweiten Schalterstellung vorgesehen, wobei die erste Schalterstellung auf einen ersten Verriegelungsaktor hinweist, wobei die zweite Schalterstellung auf einen zweiten Verriegelungsaktor hinweist, und wobei der Prozessor ausgebildet ist, ein Steuersignal zum Steuern des ersten Verriegelungsaktors zu erzeugen, falls sich der Schalter in der ersten Schalterstellung befindet, oder wobei der Prozessor ausgebildet ist, ein Steuersignal zum Steuern eines zweiten Verriegelungsaktors zu erzeugen, falls sich der Schalter in der zweiten Schalterstellung befindet. Damit wird in vorteilhafter Weise eine einfache Vorkonfigurierung der Steuervorrichtung ermöglicht.

Gemäß einer Ausführungsform umfasst die Steuervorrichtung eine Kommunikationsschnittstelle zum Konfigurieren der Steuervorrichtung. Die Kommunikationsschnittstelle ist bevorzugt zusätzlich zu dem Ausgangsterminal und/oder dem Eingangsterminal vorgesehen.

Gemäß einer Ausführungsform umfasst das Konfigurieren der Steuervorrichtung die Einstellung eines der folgenden Parameter: Art der Ladestation, Anzeige eines bestimmten Verriegelungsaktors, eine Verriegelungsart, insbesondere eine permanenten oder einen gepulsten Verriegelungsbetrieb, Zeitdauer eines Steuersignals zum Verriegeln bei Pulsbetrieb, Zeitdauer eines Steuersignals zum Entriegeln bei Pulsbetrieb, Polarität des Steuersignals bei Pulsbetrieb. Durch die Konfigurierung können insbesondere die Steuersignale zum Steuern eines Verriegelungsaktors festgelegt werden.

Gemäß einer Ausführungsform umfasst das Ausgangsterminal zum Umsetzen des Steuersignals des Prozessors in das weitere Steuersignal ein Schaltnetzwerk, insbesondere ein Relaisnetzwerk oder ein Transistornetzwerk, wobei der Prozessor ausgebildet ist, das Steuersignal zum Überführen des Schaltnetzwerk in einen vorbestimmten Schaltzustand an das Schaltnetzwerk anzulegen, und wobei das Schaltnetzwerk ausgebildet ist, ansprechend auf das Steuersignal das weitere Steuersignal zum Verriegeln oder zum Entriegeln des Verriegelungsaktors zu erzeugen. Auf diese Weise kann die Ladestation der Steuervorrichtung beispielsweise ein Ende eines Ladevorgangs mittels eines Bestätigungssignals anzeigen.

Gemäß einer Ausführungsform umfasst die Steuervorrichtung eine Energiequelle, wobei das Schaltnetzwerk zum Schalten der Energiequelle vorgesehen ist, um ein geschaltetes Ausgangssignal der Energiequelle als das weitere Steuersignal zu erzeugen.

Gemäß einer Ausführungsform ist der Prozessor ausgebildet, Steuersignale zur direkten Ansteuerung eines Verriegelungsaktors zu erzeugen.

Gemäß einem weiteren Aspekt betrifft die Erfindung eine Ladestation, wobei das Ausgangsterminal ausgebildet ist, das Steuersignal des Prozessors zur unmittelbaren Steuerung eines Verriegelungsaktors auszugeben, oder wobei das Ausgangsterminal ausgebildet ist, das Steuersignal des Prozessors in ein weiteres Steuersignal zur unmittelbaren Steuerung eines Verriegelungsaktors umzusetzen.

Gemäß einer Ausführungsform ist die Kommunikationsschnittstelle ferner zur Kommunikation mit der Ladestation ausgebildet.

Gemäß einer Ausführungsform umfasst das Ausgangsterminal zum Umsetzen des Steuersignals des Prozessors in das weitere Steuersignal ein Schaltnetzwerk, wobei der Prozessor ausgebildet ist, das Steuersignal zum Überführen des Schaltnetzwerks in einen vorbestimmten Schaltzustand an das Schaltnetzwerk anzulegen, und wobei das Schaltnetzwerk ausgebildet ist, ansprechend auf das Steuersignal das weitere Steuersignal zum Verriegeln oder zum Entriegeln des Verriegelungsaktors zu erzeugen. Das Schaltnetzwerk kann ein Relaisnetzwerk oder ein Transistornetzwerk sein.

Gemäß einer Ausführungsform ist der Prozessor ausgebildet, Steuersignale zur direkten Ansteuerung eines Verriegelungsaktors zu erzeugen. Die Verriegelung kann in diesem Falle dem Diebstahlschutz oder der Verhinderung einer unbefugten Steckerentnahme dienen.

Gemäß einem weiteren Aspekt betrifft die Erfindung eine Ladestation zum Laden eines elektrischen Energiespeichers, insbesondere eines Speichers eines elektrisch betreibbaren Fahrzeugs, mit einer Buchse zur Aufnahme eines Ladesteckers, einem Verriegelungsaktor zum Verriegeln des Ladesteckers in der Buchse, und der erfindungsgemäßen Steuervorrichtung zum Steuern des Verriegelungsaktors.

Gemäß einem weiteren Aspekt betrifft die Erfindung ein Verfahren zur Steuerung einer Mehrzahl von mittels Steuersignalen steuerbaren Verriegelungsaktoren zum Verriegeln oder zum Entriegeln eines Ladesteckers in einer elektrischen Ladestation, mit Auswählen einer Steuerungsart zum Steuern eines vorbestimmten Verriegelungsaktors der Mehrzahl von vorbestimmten Verriegelungsaktoren, Erzeugen eines Steuersignals gemäß der ausgewählten Steuerungsart zum Steuern des vorbestimmten Verriegelungsaktors, und Steuern des vorbestimmten Verriegelungsaktors ansprechend auf das Steuersignal. Durch die Auswahl kann beispielsweise festgelegt werden, ob der Verrieglungsaktor mittels eines Pulssignals oder mittels eines Konstantsignals ansteuerbbar ist.

Weitere Merkmale des Verfahrens zur Steuerung der Mehrzahl von Verriegelungsaktoren ergeben sich unmittelbar aus der Funktionalität der Steuervorrichtung oder eines Merkmals der Steuervorrichtung.

Weitere Ausführungsbeispiele werden Bezug nehmend auf die beigefügten Figuren näher erläutert. Es zeigen:
- Fig. 1: ein Blockdiagramm einer Ladestation gemäß einer Ausführungsform;
- Fig. 2: ein Blockdiagramm einer Steuervorrichtung gemäß einer Ausführungsform;
- Fig. 3: ein Prinzipdiagramm einer Steuervorrichtung gemäß einer Ausführungsform; und
- Fig. 4: ein Blockdiagramm eines Schaltnetzwerks.

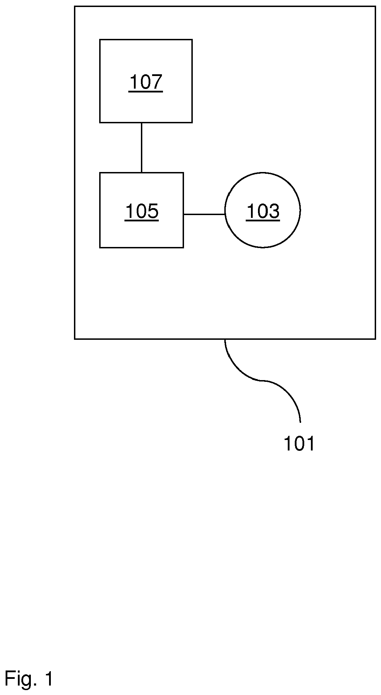

Fig. 1 zeigt ein Blockdiagramm einer Ladestation 101 zum Laden eines elektrischen Speichers von beispielsweise einem elektrisch betreibbaren Fahrzeug. Die Ladestation 101 umfasst eine Buchse 103 zur Aufnahme eines in Fig. 1 nicht dargestellten Ladesteckers, sowie einen Verriegelungsaktor 105 zum Verriegeln des Ladesteckers in der Ladestation 101, insbesondere in der Ladebuchse 103 der Ladestation 101. Die Ladestation 101 umfasst ferner eine Steuervorrichtung 107, welche zur Steuerung des Verriegelungsaktors 105 vorgesehen ist, um eine Verriegelung oder eine Entriegelung des Steckers in der Buchse 103 zu bewirken. Hierzu ist die Steuervorrichtung 107 elektrisch mit dem Verriegelungsaktor 105 verbunden. Die Steuervorrichtung 107 kann einen Prozessor zum Erzeugen von zumindest zwei unterschiedlichen Steuersignalen zum Steuern von zumindest zwei unterschiedlichen Verriegelungsaktoren der Mehrzahl von Verriegelungsaktoren, und ein elektrisches Ausgangsterminal zur Steuerung eines Verriegelungsaktors ansprechend auf ein Steuerungssignal umfassen. Die in Fig. 1 dargestellte Steuervorrichtung kann beispielsweise einige oder alle Merkmale der in Fig. 1 dargestellten Steuervorrichtung umfassen.

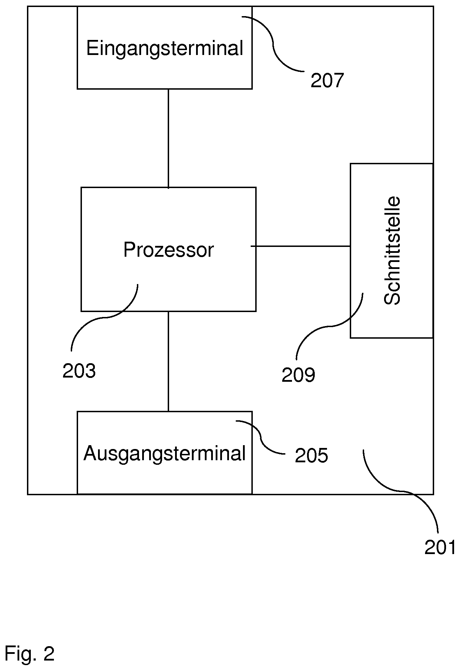

Fig. 2 zeigt ein Blockdiagramm einer Steuervorrichtung 201 gemäß einer Ausführungsform. Die Steuervorrichtung 201 ist ausgebildet, eine Mehrzahl von Steuersignalen zu erzeugen, um eine Mehrzahl von unterschiedlichen Verriegelungsaktoren zu steuern, um einen Ladestecker in einer elektrischen Ladestation zu verriegeln oder zu entriegeln. Die Steuervorrichtung 201 umfasst einen Prozessor 203, welcher ausgebildet ist, zumindest zwei unterschiedliche Steuersignale zum Steuern von zumindest zwei unterschiedlichen Verriegelungsaktoren zu erzeugen. Der Prozessor 203 ist mit einem elektrischen Ausgangsterminal 205 elektrisch verbunden, welcher für die Ansteuerung eines Verriegelungsaktors vorgesehen ist. Die Steuervorrichtung 201 umfasst ferner ein Eingangsterminal 207, um beispielsweise ein Bestätigungssignal von einem Verriegelungsaktor zu empfangen, welches das Verriegeln oder das Entriegeln des Ladesteckers anzeigt. Das Eingangsterminal 207 kann zum Empfang der vorgenannten CP- oder PP-Signale eine Schnittstelle, beispielsweise eine Fahrzeugschnittstelle umfassen, welche auch zum Empfangen von Signalen, insbesondere für die Erzeugung oder Auswertung der Pilot- und Proximity-Signale vorgesehen ist.

Die Steuervorrichtung 201 umfasst ferner eine optionale Kommunikationsschnittstelle 209, welche für die Kommunikation mit der Ladestation vorgesehen ist.

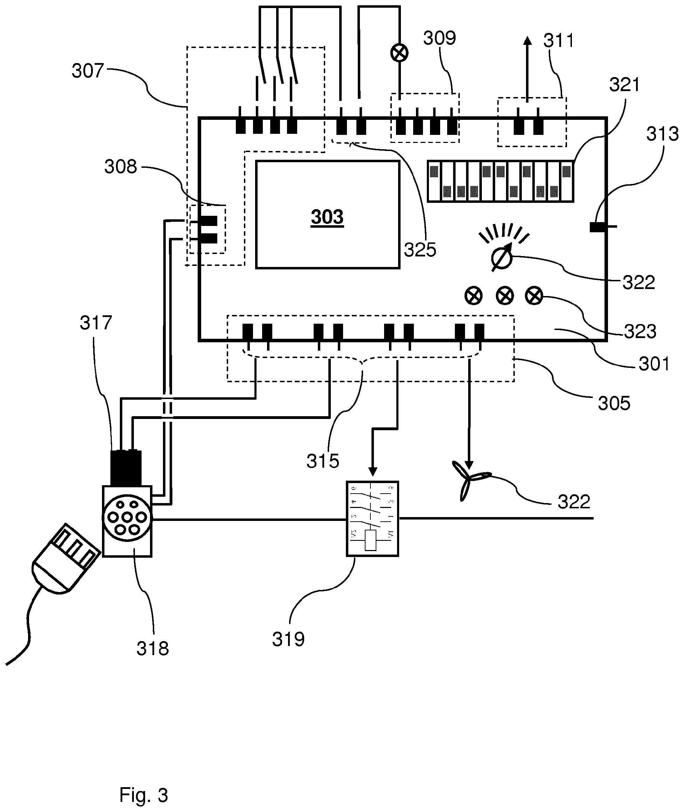

Fig. 3 zeigt eine Steuervorrichtung 301 gemäß einer Ausführungsform mit einem Prozessor 303, welcher beispielsweise ein Mikrocontroller ist, einem Ausgangsterminal 305 sowie einem Eingangsterminal 307.

Die Steuervorrichtung 301 umfasst ferner optional ein weiteres Ausgangsterminal 309 sowie ein Stromversorgungsterminal 311 mit einem Anschlusspaar. Ferner ist eine optionale Kommunikationsschnittstelle 313 vorgesehen.

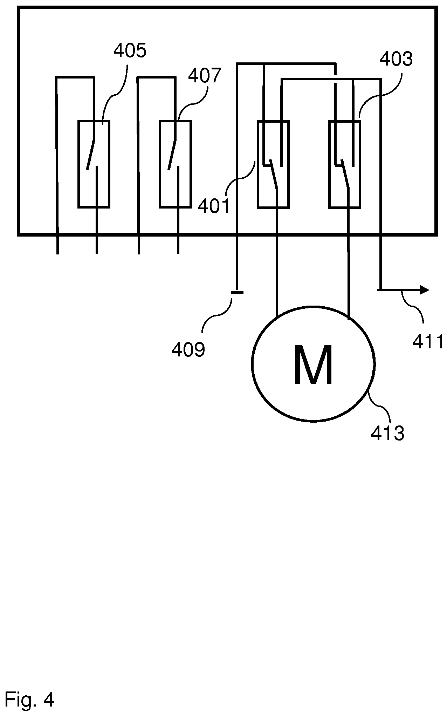

Das Ausgangsterminal 305 umfasst beispielsweise mehrere Anschlusspaare 315, beispielsweise vier Anschlusspaare 315, welche zur Ansteuerung eines in Fig. 3 beispielhaft dargestellten Verriegelungsaktors 317 oder eines Schaltnetzwerkes, beispielsweise eines Transistornetzwerkes oder eines Schaltnetzwerkes, das in Fig. 4 dargestellt ist und zur Ansteuerung des Verriegelungsaktors 317 vorgesehen ist, vorgesehen sind. Über das Ausgangsterminal 305 kann der Prozessor 303 ferner beispielsweise ein in Fig. 3 beispielhaft dargestelltes Schütz 319 oder einen Lüfter 322 ansteuern. Der Verriegelungsaktor 317 ist gemäß einer Ausführungsform kein Element der Steuervorrichtung 301. Der Verriegelungsaktor 317 ist mit einer Buchse 318 verbunden, in welche ein in Fig. 3 beispielhaft dargestellter Ladestecker einsteckbar ist.

Das Eingangsterminal 307 kann beispielsweise einen oder mehrere Anschlüsse aufweisen, über welche Bestätigungssignale von dem Verriegelungsaktor 317 oder von einer in Fig. 3 nicht dargestellten Ladestation empfangbar sind. Die Bestätigungssignale können beispielsweise eine Rückmeldung oder eine Freigabe, beispielsweise von einem Entraster, d.h. von der Entriegelung, von einem Interlock, von einer Verriegelung optional anzeigen. Das Eingangsterminal 307 kann ferner eine Schnittstelle 308 zum Kommunizieren mit einem an die Ladestation anschließbaren Energieabnehmer, insbesondere die Pilot- und Proximityfunktion zu einem Fahrzeug, umfassen. Das Eingangsterminal 307 kann ferner einen Schutzleiteranschluß umfassen.

Das Eingangsterminal 307 kann ferner Spannungsversorgungsanschlüsse 325 für beispielsweise 0V und 24V umfassen, welche beispielsweise für die Versorgungsspannung bzw. für ein Bezugspotenzial für die Eingangssignale vorgesehen sind.

Das weitere Ausgangsterminal 309 kann Anschlüsse für eine Anzeige, für einen Signalausgang oder für eine Freigabe eines Ladevorgangs aufweisen.

Die Kommunikationsschnittstelle 313 ist beispielsweise vorgesehen, um den Prozessor 303 und/oder die Steuervorrichtung 303 zu konfigurieren. Die Konfigurierung kann auch mittels eines Jumpers oder eines DIP-Schalters 321 erfolgen. Statt des DIP-Schalters 321 kann auch ein Drehschalter 322 eingesetzt werden. Durch die Schalterstellung kann beispielsweise eine Voreinstellung beispielsweise bezüglich eines Aufbaus der Ladestation, einer Auswahl eines Verriegelungsaktors, einer Aktivierung von Eingängen aus dem Eingangsterminals, einer Pulsdauer eines pulsweitenmodulierten Signals (PWM) oder eines Pilotleiteranschlusses vorgenommen werden. Ferner sind optionale LED's 323 vorgesehen, welche Systemzustände anzeigen.

Gemäß einer Ausführungsform ist der Prozessor 303 ausgebildet, Steuersignale zu erzeugen, welche unmittelbar zur Steuerung des in Fig. 3 beispielhaft dargestellten Verriegelungsaktors 317 eingesetzt werden können. In diesem Falle werden die Steuersignale unmittelbar über das Ausgangsterminal 305 dem Verriegelungsaktor 317 zugeführt. Diese Steuersignale können beispielsweise Konstant- oder Pulssignale zur Ansteuerung von an sich bekannten Verriegelungsaktoren sein.

Gemäß einer Ausführungsform umfasst das elektrische Ausgangsterminal jedoch ein Schaltnetzwerk, das die Steuersignale des Prozessors 303 über die Anschlusspaare 315, des Ausgangsterminals 305 empfängt und auf der Basis dieser Steuersignale den Verriegelungsaktor 317 steuert.

In Fig. 4 ist ein Schaltnetzwerk des Ausgangsterminals 305 mit Schaltern 401, 403 gezeigt, welche beispielsweise durch Transistoren oder durch Relais (Rel. 5-6, Rel. 7-8) gebildet ist, dargestellt. Optional sind Schalter 405 zur Schützansteuerung und Schalter 407 zur Lüfteransteuerung vorgesehen. Die Schalter 405 und 407 können als Relais oder als Transistoren ausgeführt sein.

Soll beispielsweise ein innerhalb eines Toleranzbereichs konstantes Signal zur Verriegelung permanent geschaltet werden, so kann der Schalter 401 für die Dauer der Verriegelung permanent geschaltet werden. In diesem Fall erzeugt der Prozessor 303 ein Steuersignal, das den Schalter 401 permanent schaltet. Bei Pulsbetrieb kann beispielsweise zum Verriegeln das Schalters 401 für einen definierten Zeitraum geschaltet werden, während zum Entriegeln der Schalter 403 für die Dauer eines Pulses mittels des Prozessors 303 geschaltet werden kann. Zum Entriegeln wird der Schalter 403 für die Dauer eines Pulses einer entgegengesetzten Polarität mittels des Prozessors 303 geschaltet.

Die Schalter 401 und 403 sind beispielsweise mit einem ersten Potentialanschluss 409, beispielsweise Masse, und einem zweiten Potential, beispielsweise 12 V oder 24 V DC (DC: Direct Current), geschaltet. Die Ausgänge der Schalter 401 und 403 sind mit Steuereingängen eines in Fig. 4 beispielhaft dargestellten Verriegelungsaktors 413 verbunden, welcher ein Verstellmotor oder ein Hubmagnet bzw. ein Solenoid sein kann. Dadurch kann der Verriegelungsaktor 413 durch Energiezufuhr oder Energieunterbrechung aktiviert oder deaktiviert werden.

Das in Fig. 4 dargestellte Schaltnetzwerk kann auch ein Element des in Fig. 2 dargestellten Ausgangsterminals 205 sein.

Die Auswahl des Schaltmusters zum Schalten der Schalter 401, 403 für den jeweiligen Verriegelungsaktor kann mittels eines einer Schalterstellung des Konfigurationsschalters, Beispielsweise einem mehrpoligen DIP-Schalters 321, welche der Prozessor 303 auslesen kann, oder mittels der Kommunikationsschnittstelle 313, mit welcher der Prozessor 303 verbunden ist, erfolgen.

Die in den Fig. 2 und 3 dargestellten Steuervorrichtungen 201 und 301 können als Baugruppen zur Installation in einer Ladestation, oder allgemein einer Stromversorgungseinrichtungen für Elektrofahrzeuge, vorgesehen sein. Die Steuervorrichtungen 201, 301 sind bevorzugt in der Lage, die vorstehend genannten Signale CP und PP normgerecht auszuwerten, wodurch eine Ansteuerung eines Verriegelungsaktors möglich wird. Hierbei kann geprüft werden, ob fahrzeugseitig und/oder ob ladestationseitig alle Anforderungen erfüllt sind, um beispielsweise einen Ladevorgang zu beginnen. Die Verriegelung des Ladesteckers in der Ladestation kann automatisch durch eine Ansteuerung bewirkt werden, wobei nach erfolgreicher Verriegelung der Ladevorgang durch die Steuervorrichtung 201, 301 freigegeben werden kann. Nach Beendigung des Ladevorgangs kann die Verriegelung durch die Steuervorrichtung 201, 301 entsprechend freigegeben werden.

Neben den Ausgängen des Ausgangsterminals 315, welche beispielsweise zum Ansteuern eines Verriegelungsaktors vorgesehen sein können, können die Signaleingänge des Eingangsterminals 207, 307 zum Empfangen von Bestätigungssignalen Verwendung finden, mit denen beispielsweise eine ordnungsgemäße Verriegelung eines Ladesteckers an die Steuervorrichtung 201, 301 zurückgebildet werden kann.

Gemäß einer Ausführungsform ist die jeweilige Steuervorrichtung 201, 301 für unterschiedliche Anwendungsszenarien mit unterschiedlichen Verriegelungsaktoren konfigurierbar. Die Konfiguration kann beispielsweise physikalisch an dem Gerät durch den Schalter 321 erfolgen, wobei der Schalter ein DIP-Schalter, ein Jumper oder ein Codierschalter oder eine Kombination aus diesen sein kann. Mit dem Schalter 321 kann jeweils eine Verriegelungsoption eingestellt werden, bei der die für den jeweiligen Verriegelungsaktor zu erzeugenden Steuersignale beispielsweise mittels des in Fig. 4 dargestellten Schaltnetzwerkes erzeugt werden können. Die Erzeugung der Steuersignale kann jedoch auch unmittelbar mittels des Prozessors 303 erfolgen. Hierzu kann der Prozessor 303 gemäß einer Ausführungsform über die Kommunikationsschnittstelle 313 von extern konfiguriert werden.

Die Konfiguration kann beispielsweise durchgeführt werden, um die Steuervorrichtung 201, 301 derart einzurichten, dass diese zumindest eines der folgenden Merkmale aufweist: Erkennung, ob die Ladestation eine Steckdose zur Aufnahme eines Ladesteckers aufweist oder ob der Ladestecker mit der Ladestation mittels eines fest angeschlossenen Ladekabels verbunden ist, Erkennung, ob ein Verriegelungsaktor vorhanden ist, Erkennung einer Art der Verriegelung, bei der beispielsweise erkannt wird, ob die Verriegelung durch ein Permanentsignal oder durch einen Kurzzeitbetrieb, d.h. über einen Pulsbetrieb, bewirkt werden kann, Festlegung oder Erkennung einer Länge von Schaltzeiten, falls die Verriegelung über einen Kurzzeitbetrieb eines Verriegelungsaktors erfolgt, wobei in diesem Falle für die Verriegelung und für die Entriegelung unterschiedliche Signale vorgesehen sein können, Auswertung von externen Freigabesignalen, wie beispielsweise eine Bestätigung einer Verriegelung oder Auswertung oder Freigabe über die Kommunikationsschnittstelle 209, 313.

Besonders vorteilhaft ist, dass durch die vorstehend genannte Konfiguration entsprechende nicht benutzte Eingänge von einem Ablaufprogramm nicht ausgewertet werden müssen. Dabei ist es nicht notwendig, nicht benutzte externe Eingänge der Eingangsterminals 207, 307 zu überbrücken. Darüber hinaus ist die Verwendung von externen Baugruppen, wie Wandellastrelais, überflüssig. Durch die Wahl von Schaltzeiten, d.h. von Pulsdauern, können auch unterschiedliche Verriegelungsaktoren unter Verwendung derselben Steuervorrichtung 201, 301 angesteuert werden.

Gemäß einer Ausführungsform kann die Steuervorrichtung 201, 301 durch einen Test, insbesondere während eines Einschaltvorgangs, automatisch erkennen, welchen Verriegelungsmechanismus der jeweilige Verriegelungsaktor einsetzt. Hierzu kann der Verriegelungsaktor über einen kurzen Zeitraum mit einer Spannung versorgt werden, bis ein Bestätigungssignal über das Eingangsterminal 207, 307 empfangen wird, welche eine erfolgreiche Verriegelung des Ladesteckers anzeigt. Ein derartiges Signal kann beispielsweise durch einen Mikroschalter in dem Verriegelungsaktor erzeugt werden. Fällt das Bestätigungssignal nach der Wegnahme einer Testspannung ab, so handelt es sich um einen Verriegelungsaktor, welcher zum Verriegeln eine permanente Spannung benötigt. Bleibt das Bestätigungssignal, welches eine erfolgreiche Verriegelung anzeigt, auch nach der Wegnahme der Testspannung erhalten, so handelt es sich dabei um einen Verriegelungsaktor, welcher im Pulsbetrieb arbeitet und welcher zum Entriegeln einen Spannungspuls mit entgegengesetzter Polarität benötigt.

Gemäß einer Ausführungsform, bei der der Ladestecker mittels eines Ladekabels fest mit der Ladestation verbunden ist, ist es nicht notwendig, das vorgenannte PP-Signal auszuwerten, weil keine Notwendigkeit einer Verriegelung besteht. Die entsprechenden Aktionen werden somit durch den Prozessor 203, 303, welcher mittels eines Steuerprogramms eingerichtet werden kann, nicht durchgeführt. Die durch den in Fig. 3 dargestellten PP-Kontakt ermittelten Werte zur Stromtragfähigkeit können beispielsweise in einer Konfiguration der Steuervorrichtung 201, 301 festgelegt werden. Diese Konfiguration kann mittels Software oder physikalisch durch einen DIP-Schalter erfolgen. Diejenigen Eingänge des jeweiligen Eingangsterminals, die eine ordnungsgemäße Verriegelung melden, werden dann dabei nicht ausgewertet.

Gemäß einer weiteren Ausführungsform ist die Ladestation mit einer Steckdose versehen, sie umfasst jedoch keinen Verriegelungsaktor zum Verriegeln des Ladesteckers. Der in Fig. 3 dargestellte PP-Kontakt kann dabei ausgewertet werden, wobei die Verriegelung beispielsweise in einen Programmablauf auf den Prozessor 203, 303 nicht ausgewertet werden muss. Ebenso wird ein Eingangssignal zur ordnungsgemäßen Verriegelung nicht ausgewertet.

Gemäß einer Ausführungsform umfasst eine Ladestation eine Steckdose mit einem Verriegelungsaktor sowie einen Bestätigungskontakt, über welchen eine Rückmeldung an die Steuervorrichtung 201, 301 erfolgen kann. Umfasst der Verriegelungsaktor einen Hubmagneten, der während eines Ladevorgangs durch eine äußere Energiezufuhr in einem Verriegelungszustand gehalten werden muss, so wird die ordnungsgemäße Verriegelung über einen Eingang des Eingangsterminals erfasst, was als Bedingung aufgefasst werden kann, dass das Ladeschütz 319 geschaltet wird. Umfasst der Verriegelungsaktor hingegen einen Elektromotor, welcher durch beispielsweise ein kurzes Anlaufen in einer Richtung einen Verriegelungsbolzen betätigt, so kann auch in diesem Fall die ordnungsgemäße Verriegelung über ein Eingangssignal erfasst werden. Diese Erfassung kann als Bedingung dafür eingesetzt werden, dass das Ladeschütz 319 geschaltet wird. Für die Entriegelung des Ladesteckers wird der Motor durch Ansteuerung in eine andere Richtung anlaufen.

Gemäß einer Ausführungsform verfügt die Ladestation über ein fest angeschlagenes Ladekabel, wobei der Verriegelungsaktor in einer Buchse angeordnet ist. Die Buchse dient dazu, den Ladestecker aufzunehmen und gegen unberechtigte Entnahme zu sichern für den Zeitraum in dem nicht geladen wird. Nach entsprechender Konfiguration kann sich der Benutzer vor dem Laden autorisieren und im Fall der erfolgreichen Autorisierung wird der Ladestecker entriegelt und kann entnommen und in eine Buchse eines Energieabnehmers, beispielsweise eines Fahrzeugs, gesteckt werden. Nach dem Laden kann der Ladestecker wieder zurückgesteckt und verriegelt werden

### BEZUGSZEICHENLISTE

- 101: Ladestation
- 103: Buchse
- 105: Verriegelungsaktor
- 107: Steuervorrichtung
- 201: Steuervorrichtung
- 203: Prozessor
- 205: Ausgangsterminal
- 207: Eingangsterminal
- 209: Kommunikationsschnittstelle
- 301: Steuervorrichtung
- 303: Prozessor
- 305: Ausgangsterminal
- 307: Eingangsterminal
- 308: Schnittstelle
- 309: Ausgangsterminal
- 311: Stromversorgungsterminal
- 313: Kommunikationsschnittstelle
- 315: Anschlusspaare
- 317: Verriegelungsaktor
- 318: Buchse
- 319: Schütz
- 321: DIP-Schalter
- 322: Drehschalter
- 322: Lüfter
- 323: LED
- 325: Spannungsversorgungsanschlüsse
- 401-407: Schalter
- 409: Anschluss
- 411: Anschluss
- 413: Verriegelungsaktor

## Patentansprüche

1. Steuervorrichtung (107, 201, 301), welche zur Steuerung einer Mehrzahl von mittels Steuersignalen steuerbaren Verriegelungsaktoren (105, 317, 413) zum Verriegeln oder zum Entriegeln eines Ladesteckers in einer elektrischen Ladestation (101) ausgebildet ist, mit:
einem Prozessor (203, 303) zum Erzeugen von zumindest zwei unterschiedlichen Steuersignalen zum Steuern von zumindest zwei unterschiedlichen Verriegelungsaktoren (105, 317, 413) der Mehrzahl von Verriegelungsaktoren; und
einem elektrischen Ausgangsterminal (205, 305) zur Steuerung eines Verriegelungsaktors (105, 317, 413) ansprechend auf ein Steuerungssignal des Prozessors (203, 303),
wobei
a) die Steuervorrichtung (107, 201, 301) eine Kommunikationsschnittstelle (209, 313) zum Konfigurieren der Steuervorrichtung (107, 201, 301) umfasst, wobei das Konfigurieren der Steuervorrichtung (107, 201, 301) die Einstellung eines der folgenden Parameter umfasst: Art der Ladestation, Anzeige eines bestimmten Verriegelungsaktors (105, 317, 413), eine Verriegelungsart, insbesondere einen permanenten oder einen gepulsten Verriegelungsbetrieb, Zeitdauer eines Steuersignals zum Verriegeln bei Pulsbetrieb, Zeitdauer eines Steuersignals zum Entriegeln bei Pulsbetrieb, Polarität des Steuersignals bei Pulsbetrieb,
oder
b) ein Schalter (321, 322) mit einer ersten Schalterstellung und mit einer zweiten Schalterstellung vorgesehen ist, wobei die erste Schalterstellung auf einen ersten Verriegelungsaktor (105, 317, 413) hinweist, wobei die zweite Schalterstellung auf einen zweiten Verriegelungsaktor (105, 317, 413) hinweist, und wobei der Prozessor (203, 303) ausgebildet ist, ein Steuersignal zum Steuern des ersten Verriegelungsaktors (105, 317, 413) zu erzeugen, falls sich der Schalter (321, 322) in der ersten Schalterstellung befindet, oder wobei der Prozessor (203, 303) ausgebildet ist, ein Steuersignal zum Steuern eines zweiten Verriegelungsaktors (105, 317, 413) zu erzeugen, falls sich der Schalter (321, 322) in der zweiten Schalterstellung befindet,
oder
c) die Steuervorrichtung (107, 201, 301) ein Eingangsterminal (207, 307) zum Empfangen von Signalen von einer Mehrzahl von Verriegelungsaktoren (105, 317, 413) und/oder von der Ladestation (101) umfasst, und die Steuereinrichtung (107, 201, 301) ausgebildet ist, zumindest einen Verriegelungsaktor der Mehrzahl der Verriegelungsaktoren automatisch zu erkennen.

2. Steuervorrichtung (107, 201, 301) gemäß Anspruch 1,
wobei die zumindest zwei unterschiedlichen Steuersignale Verriegelungssignale zum Überführen von zumindest zwei unterschiedlichen Verriegelungsaktoren (105, 317, 413) der Mehrzahl von Verriegelungsaktoren in jeweils einen Verriegelungszustand zum Verriegeln des Ladesteckers in der Ladestation (101) in einer Ladebuchse (103, 318) der Ladestation sind,
oder
wobei die zumindest zwei unterschiedlichen Steuersignale Entriegelungssignale zum Überführen von zumindest zwei unterschiedlichen Verriegelungsaktoren (105, 317, 413) in jeweils einen Entriegelungszustand zum Entriegeln des Ladesteckers in der Ladestation (101) in einer Ladebuchse der Ladestation sind.

3. Steuervorrichtung (107, 201, 301) gemäß einem der vorstehenden Ansprüche, wobei der Prozessor (203, 303) ausgebildet ist, ein erstes Steuersignal zum Steuern zum Verriegeln oder zum Entriegeln eines ersten Verriegelungsaktors (105, 317, 413) der Mehrzahl von Verriegelungsaktoren an das elektrische Ausgangsterminal (205, 305) anzulegen, oder ein zweites Steuersignal zum Steuern zum Verriegeln oder zum Entriegeln eines zweiten Verriegelungsaktors (105, 317, 413) der Mehrzahl von Verriegelungsaktoren an das elektrische Ausgangsterminal (205, 305) anzulegen.

4. Steuervorrichtung (107, 201, 301) gemäß einem der vorstehenden Ansprüche, wobei der Prozessor (203, 303) oder das Ausgangsterminal (205, 305) ausgebildet ist, eine innerhalb eines Toleranzbereichs konstante Signalamplitude zum Verriegeln des Ladesteckers zu erzeugen, und wobei der Prozessor (203, 303) oder das Ausgangsterminal (205, 305) ausgebildet ist, eine innerhalb eines Toleranzbereichs konstante zweite Signalamplitude zum Entriegeln des Ladesteckers zu erzeugen, wobei die erste Signalamplitude und die zweite Signalamplitude unterschiedlich sind.

5. Steuervorrichtung (107, 201, 301) gemäß einem der vorstehenden Ansprüche, wobei der Prozessor (203, 303) ausgebildet ist, einen ersten Signalimpuls einer ersten Polarität als Steuersignal zur Verriegelung einer ersten Verriegelung der Mehrzahl von Verriegelungen zu erzeugen, und wobei der der Prozessor (203, 303) ausgebildet ist, einen zweiten Signalimpuls einer zweiten Polarität als Steuersignal zum Entriegeln einer ersten Verriegelung der Mehrzahl von Verriegelungen zu erzeugen, wobei die erste Polarität und die zweite Polarität unterschiedlich sind.

6. Steuervorrichtung (107, 201, 301) gemäß Anspruch 5, wobei der erste Signalimpuls und der zweite Signalimpuls innerhalb eines Toleranzbereichs gleiche Amplituden aufweisen.

7. Steuervorrichtung (107, 201, 301) gemäß Anspruch 6, wobei die Signalimpulse zeitlich begrenzt sind und jeweils eine innerhalb eines Toleranzbereichs gleiche oder unterschiedliche Zeitdauer aufweisen.

8. Steuervorrichtung (107, 201, 301) gemäß einem der vorstehenden Ansprüche, wobei das Eingangsterminal (207, 307) zum Empfangen eines Bestätigungssignals von einem Verriegelungsaktor (105, 317, 413) ausgebildet ist, wobei das Bestätigungssignal eine erfolgreiche Verriegelung oder eine erfolgreiche Entriegelung des Ladesteckers anzeigt, wobei der Prozessor (203, 303) ausgebildet ist, ein Freigabesignal zum Starten eines Ladevorgangs zu erzeugen und an das Ausgangsterminal (205, 305) anzulegen, falls das Bestätigungssignal eine erfolgreiche Verriegelung des Ladesteckers anzeigt,
oder
wobei der Prozessor (203, 303) ausgebildet ist, ein Steuersignal zum Entriegeln des Ladesteckers nur dann zu erzeugen, wenn ein Ladevorgang beendet wurde.

9. Steuervorrichtung (107, 201, 301) gemäß einem der vorstehenden Ansprüche, wobei das Eingangsterminal (207, 307) eine Schnittstelle zu einem an die Ladestation anschließbaren Energieabnehmer, nämlich zu einem elektrisch betreibbaren Fahrzeug, aufweist, wobei die Schnittstelle für eine die Verriegelung des Ladesteckers initiierende Kommunikation für eine Signalabfolge zur Initiierung und/oder kontinuierlichen Überwachung und/oder Beendigung des Ladevorgangs und/oder die darin eingegliederten Verriegelungs- und/oder Entriegelungsvorgänge, vorgesehen ist.

10. Steuervorrichtung (107, 201, 301) gemäß einem der vorstehenden Ansprüche, wobei das Eingangsterminal (207, 307) ferner zum Empfangen eines Berechtigungssignals ausgebildet ist, und wobei der Prozessor (203, 303) ausgebildet ist, ein Steuersignal zum Entriegeln des Ladesteckers nur dann zu erzeugen, falls das Berechtigungssignal das Vorliegen einer Berechtigung eines Benutzers der Ladestation (101) zum Beginn eines Ladavorgangs anzeigt.

11. Steuervorrichtung (107, 201, 301) gemäß einem der vorstehenden Ansprüche, wobei der Prozessor (203, 303) ausgebildet ist, ein Steuersignal zum Ansteuern eines ersten Verriegelungsaktors (105, 317, 413) zum Verriegeln des Ladesteckers für eine vorbestimmte Zeitdauer zu erzeugen, wobei das Ausgangsterminal (205, 305) ausgebildet ist, den Verriegelungsaktor ansprechend auf das Steuersignal für die vorbestimmte Zeitdauer anzusteuern, und wobei der Prozessor (203, 303) ausgebildet ist, den Verriegelungsaktor auf der Basis des empfangenen Bestätigungssignals bei Beendigung der Ansteuerung des Verriegelungsaktors zu erkennen.

12. Steuervorrichtung (107, 201, 301) gemäß einem der vorstehenden Ansprüche, wobei die Kommunikationsschnittstelle (209, 313) ferner zur Kommunikation mit der Ladestation ausgebildet ist.

13. Steuervorrichtung (107, 201, 301) gemäß einem der vorstehenden Ansprüche, wobei das Ausgangsterminal (205, 305) ausgebildet ist, das Steuersignal des Prozessors (203, 303) zur unmittelbaren Steuerung eines Verriegelungsaktors (105, 317, 413) auszugeben, oder
wobei das Ausgangsterminal (205, 305) ausgebildet ist, das Steuersignal des Prozessors (203, 303) in ein weiteres Steuersignal zur unmittelbaren Steuerung eines Verriegelungsaktors (105, 317, 413) umzusetzen.

14. Steuervorrichtung (107, 201, 301) gemäß Anspruch 13, wobei das Ausgangsterminal (205, 305) zum Umsetzen des Steuersignals des Prozessors (203, 303) in das weitere Steuersignal ein Schaltnetzwerk (401, 403) mit zumindest einem Schalter (401, 403) umfasst, wobei der Prozessor (203, 303) ausgebildet ist, das Steuersignal zum Überführen des Schaltnetzwerkes (401, 403) in einen vorbestimmten Schaltzustand an das Schaltnetzwerk (401, 403) anzulegen, und wobei das Schaltnetzwerk (401, 403) ausgebildet ist, ansprechend auf das Steuersignal das weitere Steuersignal zum Verriegeln oder zum Entriegeln des Ladesteckers zu erzeugen.

15. Steuervorrichtung (107, 201, 301) gemäß Anspruch 14, die ferner eine Energiequelle aufweist, wobei das Schaltnetzwerk (401, 403) zum Schalten der Energiequelle vorgesehen ist, um ein geschaltetes Ausgangssignal der Energiequelle als das weitere Steuersignal zu erzeugen.

16. Steuervorrichtung (107, 201, 301) gemäß Anspruch 13, wobei der Prozessor (203, 303) ausgebildet ist, Steuersignale zur direkten Ansteuerung eines Verriegelungsaktors (105, 317, 413) zu erzeugen.

17. Ladestation (101) zum Laden eines elektrischen Energiespeichers, nämlich eines Speichers eines elektrisch betreibbaren Fahrzeugs, mit:
einer Buchse (103, 318) zur Aufnahme eines Ladesteckers,
einem Verriegelungsaktor (105, 317, 413) zum Verriegeln des Ladesteckers in der Buchse; und
der Steuervorrichtung (107, 201, 301) gemäß einem der Ansprüche 1 bis 16 zum Steuern des Verriegelungsaktors (105, 317, 413).

## Claims

1. Control apparatus (107, 201, 301) configured to control a plurality of lock actuators (105, 317, 413), which are controllable by means of control signals, for locking or unlocking a charging plug in an electrical charging station (101), having:
a processor (203, 303) for generating at least two different control signals for controlling at least two different lock actuators (105, 317, 413) from the plurality of lock actuators; and
an electrical output terminal (205, 305) for controlling a lock actuator (105, 317, 413) in response to a control signal of the processor (203, 303),
wherein
a) the control apparatus (107, 201, 301) comprises a communication interface (209, 313) for configuring the control apparatus (107, 201, 301), wherein the configuring of the control apparatus (107, 201, 301) comprises the setting of one of the following parameters: type of charging station, display of a particular lock actuator (105, 317, 413), a lock type, in particular a permanent or a pulsed lock mode, duration of a control signal for locking in pulse mode, duration of a control signal for unlocking in pulse mode, polarity of the control signal in pulse mode,
or
b) a switch (321, 322) having a first switch position and having a second switch position is provided, wherein the first switch position indicates a first lock actuator (105, 317, 413), wherein the second switch position indicates a second lock actuator (105, 317, 413), and wherein the processor (203, 303) is configured to generate a control signal for controlling the first lock actuator (105, 317, 413) if the switch (321, 322) is in the first switch position, or wherein the processor (203, 303) is configured to generate a control signal for controlling a second lock actuator (105, 317, 413) if the switch (321, 322) is in the second switch position,
or
c) the control apparatus (107, 201, 301) comprises an input terminal (207, 307) for receiving signals from a plurality of lock actuators (105, 317, 413) and/or from the charging station (101), and the control device (107, 201, 301) is configured to detect at least one locks actuator from the plurality of locks actuators automatically.

2. Control apparatus (107, 201, 301) according to Claim 1,
wherein the at least two different control signals are lock signals for transferring at least two different lock actuators (105, 317, 413) from the plurality of lock actuators to a respective lock state for locking the charging plug in the charging station (101) in a charging socket (103, 318) of the charging station,
or
wherein the at least two different control signals are unlock signals for transferring at least two different lock actuators (105, 317, 413) to a respective unlocked state for unlocking the charging plug in the charging station (101) in a charging socket of the charging station.

3. Control apparatus (107, 201, 301) according to either of the preceding claims, wherein the processor (203, 303) is configured to apply a first control signal for control for locking or unlocking a first lock actuator (105, 317, 413) from the plurality of lock actuators to the electrical output terminal (205, 305), or to apply a second control signal for control for locking or unlocking a second lock actuator (105, 317, 413) from the plurality of lock actuators to the electrical output terminal (205, 305).

4. Control apparatus (107, 201, 301) according to one of the preceding claims, wherein the processor (203, 303) or the output terminal (205, 305) is configured to generate a signal amplitude that is constant within a tolerance range for locking the charging plug, and wherein the processor (203, 303) or the output terminal (205, 305) is configured to generate a second signal amplitude that is constant within a tolerance range for unlocking the charging plug, the first signal amplitude and the second signal amplitude being different.

5. Control apparatus (107, 201, 301) according to one of the preceding claims, wherein the processor (203, 303) is configured to generate a first signal pulse of a first polarity as a control signal for locking a first lock from the plurality of locks, and wherein the processor (203, 303) is configured to generate a second signal pulse of a second polarity as a control signal for unlocking a first lock from the plurality of locks, the first polarity and the second polarity being different.

6. Control apparatus (107, 201, 301) according to Claim 5, wherein the first signal pulse and the second signal pulse have identical amplitudes within a tolerance range.

7. Control apparatus (107, 201, 301) according to Claim 6, wherein the signal pulses have a time limit and each have a duration that is different or identical within a tolerance range.

8. Control apparatus (107, 201, 301) according to one of the preceding claims, wherein the input terminal (207, 307) is configured to receive a confirmation signal from a lock actuator (105, 317, 413), wherein the confirmation signal indicates successful locking or successful unlocking of the charging plug, wherein the processor (203, 303) is configured to generate an enable signal for starting a charging process and to apply said enable signal to the output terminal (205, 305) if the confirmation signal indicates successful locking of the charging connector,
or
wherein the processor (203, 303) is configured to generate a control signal for unlocking the charging plug only when a charging process has been terminated.

9. Control apparatus (107, 201, 301) according to one of the preceding claims, wherein the input terminal (207, 307) has an interface to an energy consumer connectable to the charging station, namely to an electrically operable vehicle, wherein the interface is provided for a communication, initiating the locking of the charging plug, for a signal sequence for initiating and/or continuously monitoring and/or terminating the charging process and/or for the locking and/or unlocking processes incorporated therein.

10. Control apparatus (107, 201, 301) according to one of the preceding claims, wherein the input terminal (207, 307) is further configured to receive an authorization signal, and wherein the processor (203, 303) is configured to generate a control signal for unlocking the charging plug only if the authorization signal indicates the presence of authorization of a user of the charging station (101) at the beginning of a charging process.

11. Control apparatus (107, 201, 301) according to one of the preceding claims, wherein the processor (203, 303) is configured to generate a control signal for actuating a first lock actuator (105, 317, 413) for locking the charging plug for a predetermined period, wherein the output terminal (205, 305) is configured to actuate the lock actuator in response to the control signal for the predetermined period, and wherein the processor (203, 303) is configured to detect the lock actuator on the basis of the received confirmation signal on termination of the actuation of the lock actuator.

12. Control apparatus (107, 201, 301) according to one of the preceding claims, wherein the communication interface (209, 313) is further configured for communication with the charging station.

13. Control apparatus (107, 201, 301) according to one of the preceding claims, wherein the output terminal (205, 305) is configured to output the control signal of the processor (203, 303) for directly controlling a lock actuator (105, 317, 413), or
wherein the output terminal (205, 305) is configured to convert the control signal of the processor (203, 303) into a further control signal for directly controlling a lock actuator (105, 317, 413).

14. Control apparatus (107, 201, 301) according to Claim 13, wherein the output terminal (205, 305) for converting the control signal of the processor (203, 303) into the further control signal comprises a switching network (401, 403) having at least one switch (401, 403), wherein the processor (203, 303) is configured to apply the control signal for transferring the switching network (401, 403) to a predetermined switching state to the switching network (401, 403), and wherein the switching network (401, 403) is configured to respond to the control signal by generating the further control signal for locking or unlocking the charging plug.

15. Control apparatus (107, 201, 301) according to Claim 14, which further has an energy source, wherein the switching network (401, 403) is provided for switching the energy source in order to generate a switched output signal of the energy source as the further control signal.

16. Control apparatus (107, 201, 301) according to Claim 13, wherein the processor (203, 303) is configured to generate control signals for directly actuating a lock actuator (105, 317, 413).

17. Charging station (101) for charging an electrical energy store, namely a store of an electrically operable vehicle, having:
a socket (103, 318) for receiving a charging plug,
a lock actuator (105, 317, 413) for locking the charging plug in the socket; and
the control apparatus (107, 201, 301) according to one of Claims 1 to 16 for controlling the lock actuator (105, 317, 413).

## Revendications

1. Dispositif de commande (107, 201, 301), lequel est conçu pour commander une pluralité d'actionneurs de verrouillage (105, 317, 413) susceptibles d'être commandés au moyen de signaux de commande, pour le verrouillage ou le déverrouillage d'un connecteur de charge dans un poste de chargement électrique (101), comprenant :
un processeur (203, 303) destiné à générer au moins deux différents signaux de commande pour commander au moins deux différents actionneurs de verrouillage (105, 317, 413) parmi la pluralité d'actionneurs de verrouillage ; et
un terminal de sortie (205, 305) électrique, destiné à commander un actionneur de verrouillage (105, 317, 413) en réponse à un signal de commande du processeur (203, 303),
a) le dispositif de commande (107, 201, 301) comprenant une interface de communication (209, 313) pour la configuration du dispositif de commande (107, 201, 301), la configuration du dispositif de commande (107, 201, 301) comprenant le réglage de l'un des paramètres suivants : la nature du poste de chargement, l'affichage d'un certain actionneur de verrouillage (105, 317, 413), un type de verrouillage, notamment un mode de verrouillage permanent ou par impulsions, la durée d'un signal de commande pour le verrouillage en mode par impulsions, la durée d'un signal de commande pour le déverrouillage en mode par impulsions, la polarité du signal de commande en mode par impulsions,
ou
b) un interrupteur (321, 322) avec une première position d'interrupteur et avec une deuxième position d'interrupteur étant prévu, la première position d'interrupteur indiquant un premier actionneur de verrouillage (105, 317, 413), la deuxième position d'interrupteur indiquant un deuxième actionneur de verrouillage (105, 317, 413), et le processeur (203, 303) étant conçu pour générer un signal de commande pour commander le premier actionneur de verrouillage (105, 317, 413) si l'interrupteur (321, 322) se trouve dans la première position d'interrupteur ou le processeur (203, 303) étant conçu pour générer un signal de commande pour commander un deuxième actionneur de verrouillage (105, 317, 413) si l'interrupteur (321, 322) se trouve dans la deuxième position d'interrupteur,
ou
c) le dispositif de commande (107, 201, 301) comprenant un terminal d'entrée (207, 307) pour la réception de signaux de la part d'une pluralité d'actionneurs de verrouillage (105, 317, 413) et/ou du poste de chargement (101), et le dispositif de commande (107, 201, 301) étant conçu pour identifier automatiquement au moins un actionneur de verrouillage parmi la pluralité des actionneurs de verrouillage.

2. Dispositif de commande (107, 201, 301) selon la revendication 1,
les au moins deux différents signaux de commande étant des signaux de verrouillage pour amener au moins deux différents actionneurs de verrouillage (105, 317, 413) parmi la pluralité d'actionneurs de verrouillage dans chaque fois un état de verrouillage pour verrouiller le connecteur de charge dans le poste de chargement (101) dans une prise de chargement (103, 318) du poste de chargement,
ou
les au moins deux différents signaux de commande étant des signaux de déverrouillage pour amener au moins deux différents actionneurs de verrouillage (105, 317, 413) dans chaque fois un état de déverrouillage pour déverrouiller le connecteur de charge dans le poste de chargement (101) dans une prise de chargement du poste de chargement.

3. Dispositif de commande (107, 201, 301) selon l'une quelconque des revendications précédentes, le processeur (203, 303) étant conçu pour appliquer au terminal de sortie (205, 305) électrique un premier signal de commande pour commander le verrouillage ou le déverrouillage d'un premier actionneur de verrouillage (105, 317, 413) parmi la pluralité d'actionneurs de verrouillage ou pour appliquer au terminal de sortie (205, 305) électrique un deuxième signal de commande pour commander le verrouillage ou le déverrouillage d'un deuxième actionneur de verrouillage (105, 317, 413) parmi la pluralité d'actionneurs de verrouillage.

4. Dispositif de commande (107, 201, 301) selon l'une quelconque des revendications précédentes, le processeur (203, 303) ou le terminal de sortie (205, 305) étant conçu pour générer une amplitude de signal constante dans une plage de tolérance pour verrouiller le connecteur de charge et le processeur (203, 303) ou le terminal de sortie (205, 305) étant conçu pour générer une deuxième amplitude de signal constante dans une plage de tolérance pour déverrouiller le connecteur de charge, la première amplitude de signal et la deuxième amplitude de signal étant différentes.

5. Dispositif de commande (107, 201, 301) selon l'une quelconque des revendications précédentes, le processeur (203, 303) étant conçu pour générer une première impulsion de signal avec une première polarité en tant que signal de commande pour verrouiller un premier verrouillage parmi la pluralité de verrouillages et le processeur (203, 303) étant conçu pour générer une deuxième impulsion de signal avec une deuxième polarité en tant que signal de commande pour déverrouiller un premier verrouillage parmi la pluralité de verrouillages, la première polarité et la deuxième polarité étant différentes.

6. Dispositif de commande (107, 201, 301) selon la revendication 5, la première impulsion de signal et la deuxième impulsion de signal présentant les mêmes amplitudes dans une plage de tolérance.

7. Dispositif de commande (107, 201, 301) selon la revendication 6, les impulsions de signal étant limitées dans le temps et chaque fois dans une plage de tolérance, présentant une durée identique ou différente.

8. Dispositif de commande (107, 201, 301) selon l'une quelconque des revendications précédentes, le terminal d'entrée (207, 307) étant conçu pour réceptionner un signal de confirmation de la part d'un actionneur de verrouillage (105, 317, 413), le signal de confirmation indiquant un verrouillage réussi ou un déverrouillage réussi du connecteur de charge, le processeur (203, 303) étant conçu pour appliquer un signal de validation pour le démarrage d'un processus de charge et pour l'appliquer au terminal de sortie (205, 305) si le signal de confirmation indique un verrouillage réussi du connecteur de charge,
ou
le processeur (203, 303) étant conçu pour ne générer un signal de commande pour le déverrouillage du connecteur de charge qu'une fois qu'un processus de charge a été achevé.

9. Dispositif de commande (107, 201, 301) selon l'une quelconque des revendications précédentes, le terminal d'entrée (207, 307) comportant une interface vers un consommateur d'énergie susceptible d'être raccordé sur le poste de chargement, à savoir sur un véhicule à fonctionnement électrique, l'interface étant prévue pour une communication initiant le verrouillage du connecteur de charge pour une séquence de signaux destinée à initier et/ou à superviser en continu et/ou à achever le processus de charge et/ou les processus de verrouillage et/ou de déverrouillage qui y sont intégrés.

10. Dispositif de commande (107, 201, 301) selon l'une quelconque des revendications précédentes, le terminal d'entrée (207, 307) étant conçu par ailleurs pour réceptionner un signal d'autorisation et le processeur (203, 303) étant conçu pour ne générer un signal de commande pour le déverrouillage du connecteur de charge que si le signal d'autorisation indique la présence d'une autorisation d'un utilisateur du poste de chargement (101) à démarrer un processus de charge.

11. Dispositif de commande (107, 201, 301) selon l'une quelconque des revendications précédentes, le processeur (203, 303) étant conçu pour générer un signal de commande pour l'amorçage d'un premier actionneur de verrouillage (105, 317, 413) destiné à verrouiller le connecteur de charge pour une durée prédéfinie, le terminal de sortie (205, 305) étant conçu pour amorcer l'actionneur de verrouillage en réponse au signal de commande pour la durée prédéfinie et le processeur (203, 303) étant conçu pour identifier l'actionneur de verrouillage sur la base du signal de confirmation réceptionné lors de l'achèvement de l'amorçage de l'actionneur de verrouillage.

12. Dispositif de commande (107, 201, 301) selon l'une quelconque des revendications précédentes, l'interface de communication (209, 313) étant conçue par ailleurs pour la communication avec le poste de chargement.

13. Dispositif de commande (107, 201, 301) selon l'une quelconque des revendications précédentes, le terminal de sortie (205, 305) étant conçu pour délivrer le signal de commande du processeur (203, 303) pour la commande directe d'un actionneur de verrouillage (105, 317, 413),
ou
le terminal de sortie (205, 305) étant conçu pour convertir le signal de commande du processeur (203, 303) en un autre signal de commande pour la commande directe d'un actionneur de verrouillage (105, 317, 413).

14. Dispositif de commande (107, 201, 301) selon la revendication 13, pour convertir le signal de commande du processeur (203, 303) en l'autre signal de commande, le terminal de sortie (205, 305) comprenant un réseau de commutation (401, 403) doté d'au moins un interrupteur (401, 403), le processeur (203, 303) étant conçu pour appliquer au réseau de commutation (401, 403) le signal de commande destiné à faire passer le réseau de commutation (401, 403) dans un état de commutation prédéfini et le réseau de commutation (401, 403) étant conçu pour générer l'autre signal de commande pour le verrouillage ou pour le déverrouillage du connecteur de charge en réponse au signal de commande.

15. Dispositif de commande (107, 201, 301) selon la revendication 14 qui comporte par ailleurs une source d'énergie, le réseau de commutation (401, 403) étant prévu pour commuter la source d'énergie, pour générer un signal de sortie commuté de la source d'énergie en tant que l'autre signal de commande.

16. Dispositif de commande (107, 201, 301) selon la revendication 13, le processeur (203, 303) étant conçu pour générer des signaux de commande pour l'amorçage direct d'un actionneur de verrouillage (105, 317, 413).

17. Poste de chargement (101) destiné à charger un accumulateur d'énergie électrique, à savoir un accumulateur d'un véhicule à fonctionnement électrique, comportant :
une prise (103, 318) destinée à recevoir un connecteur de charge,
un actionneur de verrouillage (105, 317, 413) pour verrouiller le connecteur de charge dans la prise ;
et
le dispositif de commande (107, 201, 301) selon l'une quelconque des revendications 1 à 16, destiné à commander l'actionneur de verrouillage (105, 317, 413).
